# NEW EUROPEAN PATENT SPECIFICATION

(11) **EP 1 555 876 B2**
(45) Date of publication and mention of the opposition decision: **11.05.2011**
(45) Mention of the grant of the patent: 23.05.2007
(21) Application number: 03767499.1
(22) Date of filing: 01.10.2003
(51) Int. Cl.: A01N 43/76, A01N 43/56

(54) **COMBINATIONS OF ARYLOXYPHENOXYPROPIONATES AND SAFENERS AND THEIR USE FOR INCREASING WEED CONTROL**
ARYLOXYPHENOXYPROPIONATE UND SAFENER ENTHALTENDE MITTEL UND DEREN VERWENDUNG ZUR ERHÖHUNG DER UNKRAUTBEKÄMPFUNG
COMBINAISONS D'ARYLOXYPHENOXYPROPIONATES ET DE PHYTOPROTECTEURS, ET LEUR UTILISATION POUR LUTTER CONTRE LES MAUVAISES HERBES

(30) Priority: 19.10.2002 EP 02023436
(43) Date of publication of application: 27.07.2005
(73) Proprietor: Bayer CropScience AG, 40789 Monheim (DE)
(72) Inventor: HACKER, Erwin, 65239 Hochheim (DE); BIERINGER, Hermann, 65817 Eppstein (DE); HUFF, Hans, Philipp, 65817 Eppstein (DE); WILLMS, Lothar, 65719 Hofheim (DE)
(86) International application number: PCT/EP2003/010898
(87) International publication number: WO 2004/034788

(56) References cited:
- EP-A- 0 533 057
- WO-A-91/07874
- US-A- 5 703 008
- US-A- 5 733 847
- INDEX PHYTOSANITAIRE ACTA 2000, pages 320 - 321
- INDEX PHYTOSANITAIRE ACTA 2001, page 378
- BIOLOGISCHE BUNDESANSTALT FÜR LAND- UND FORSTWIRTSCHAFT: 'Pflanzenschutzmittel-Verzeichnis Teil 1', 1997, BUNDESREPUBLIK DEUTSCHLAND, ISSN 0178-059X page 154
- UNITED STATES ENVIRONMENTAL PROTECTION AGENCY: 'Pesticide Fact Sheet for Cyhalofop-butyl' 23 May 2002,
- 'Quizalofop-p-tefuryl' COMMONWEALTH OF AUSTRALIA GAZETTE no. 2, 06 February 2001, pages 12 - 14
- INDEX PHYTOSANITAIRE ACTA 1999, page 319

## Description

The invention relates to the technical field of herbicide-safeners for crop protection, in particular to the use of combinations of aryloxyphenoxypropionate herbicides and specific safeners which are highly suitable for selective control of harmful plants in crops of useful plants.

Aryloxyphenoxypropionate herbicides are a class of compounds which are known to be suitable for various herbicidal purposes. These include for example, herbicides such as clodinafop-propargyl, cyhalofop-butyl, diclofop, diclofop-methyl, fenoxaprop-P-ethyl, fluazifop, fluazifop-butyl, fluazifop-P-butyl, haloxyfop, haloxyfop-etotyl, haloxyfop-P-methyl, propaquizafop, quizalofop, quizalofop-ethyl, quizalofop-P, quizalofop-P-ethyl and quizalofop-P-tefuryl, each of which are known e.g. from the Pesticide Manual 12^{th} edition (British Crop Protection Council), 2000; cf. EP 0083556, US 4713109, US 4894085, US 4897481, EP 302203, DE 2136828, DE 2223894, EP 0635996, GB 1599121, EP 52798, US 4545807 and GB 2042539.

Herbicidally active compounds of the aryloxyphenoxypropionate type are generally used post-emergence for controlling grass weeds particularly in cereals such as rice, wheat and barley, or in a variety of broad-leaved crops, and can be employed at relatively low application rates. However, these compounds are not always fully compatible with some important crop plants and in some cases the injury to crop plants at herbicide application rates needed to control weed growth renders the herbicide unsuitable for control of a broad range of weed species in the presence of certain crops. Reduction in herbicidal injury to crops without an unacceptable reduction in the herbicidal action can be accomplished by use of crop protectants known as "safeners", also sometimes referred to as "antidotes" or "antagonists". It is known that herbicidally active compounds of the aryloxyphenoxypropionate type may be used in combination with a safener, for example as described in EP 0635996 (US-5700758), which discloses that the phytotoxic effects of herbicides including aryloxyphenoxypropionates may be safened using 4,5-pyrazoline-3-carboxylic ester derivatives, and in particular the combination of fenoxaprop-P-ethyl and mefenpyr-diethyl is specifically mentioned.

We have now shown that in addition to the known crop safening effect, surprisingly, the use of specific safeners leads to an increased level of control of certain important weed species (particularly for example Alopecurus myosuroides) by aryloxyphenoxypropionate herbicides. This effect is also found for the combination of fenoxaprop-P-ethyl and mefenpyr-diethyl, which combination is not novel as it is used commercially. The effect, however, has not been known for the combination so far.

Accordingly, the present invention provides the use of a compound of formula (I) or a salt thereof (compounds (B)): 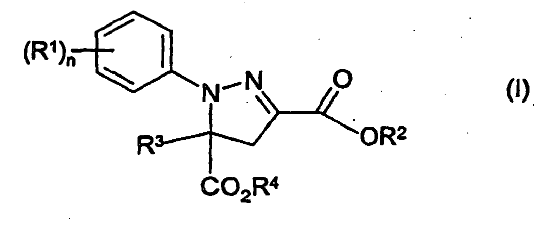 in which
(R¹)ₙ is n radicals R¹ where the R¹ are identical or different and are each halogen or (C₁-C₄)-haloalkyl,
n is an integer from 1 to 3,
R² is hydrogen, (C₁-C₆)-alkyl, (C₁-C₄)-alkoxy-(C₁-C₄)-alkyl, (C₃-C₆)-cycloalkyl, tri-(C₁-C₄)-alkyl-silyl or tri-(C₁-C₄)-alkyl-silylmethyl,
R³ is hydrogen, (C₁-C₆)-alkyl, (C₁-C₆)-haloalkyl, (C₂-C₆)-alkenyl, (C₂-C₆)-alkynyl or (C₃-C₆)-cycloalkyl, and
R⁴ is hydrogen or (C₁-C₁₂)-alkyl,
for increasing the weed control of one or more aryloxyphenoxypropionate herbicides (A) or an agriculturally acceptable salt thereof.

The term "aryloxyphenoxypropionate herbicide" is generally used to describe herbicides from the class of fatty acid synthesis inhibitors, in particular inhibitors of the enzyme acetyl CoA carboxylase (ACCase) in plants, and which also has the structural feature of a phenoxypropionate substituted in the phenyl ring by a phenoxy group or functionally similar aryloxy or heteroaryloxy groups. An alternative expression is "(hetero)aryloxyphenoxyproptionate herbicide", including esters and salts of the basic acids. Preferred are the acids, salts thereof and esters thereof, such as (C₁-C₈)alkyl esters, substituted (C₁-C₈)alkylesters, (C₂-C₈)alkenyl esters or (C₂-C₈)alkynyl esters, in particular (C₁-C₄)alkyl esters, (C₁-C₄)alkylesters which are substituted by one or more radicals selected from the group consisting of halogen and (C₁-C₄)alkoxy, or (C₂-C₄)alkenyl esters or (C₂-C₄)alkynyl esters.

Preferably for use in the present invention the aryloxyphenoxypropionate herbicide (A) is selected from the group consisting of:
(A1) clodinafop-propargyl (prop-2-ynyl (R)-2-[4-(5-chloro-3-fluoropyridin-2-yloxy)phenoxy]propionate), or a salt thereof,
(A2) cyhalofop-butyl (butyl (R)-2-[4-(4-cyano-2-fluorophenoxy)phenoxy]propionate),
(A3) diclofop ((*RS*)-2-[4-(2,4-dichlorophenoxy)phenoxy]propionic acid), or a salt thereof,
(A4) diclofop-methyl (methyl (*RS*)-2-[4-(2,4-dichlorophenoxy)phenoxy]propionate),
(A5) fenoxaprop-P-ethyl (ethyl (R)-2-[4-(6-chloro-1,3-benzoxazol-2-yloxy)phenoxy]propionate),
(A6) fenoxaprop-P ((R)-2-[4-(6-chloro-1,3-benzoxazol-2-yloxy)phenoxy]propionic acid) or a salt thereof,
(A7) fenoxaprop-ethyl (ethyl (*RS*)-2-[4-(6-chloro-1,3-benzoxazol-2-yloxy)phenoxy]propionate),
(A8) fenoxaprop ((RS)-2-[4-(6-chloro-1,3-benzoxazol-2-yloxy)phenoxy]propionic acid) or a salt thereof,
(A9) fluazifop ((*RS*)-2-[4-(5-trifluoromethyl-2-pyridyloxy)phenoxy]propionic acid), or a salt thereof,
(A10) fluazifop-butyl (butyl (*RS*)-2-[4-(5-trifluoromethyl-2-pyridyloxy)phenoxy]propionate),
(A11) fluazifop-P-butyl (butyl (R)-2-[4-(5-trifluoromethyl-2-pyridyloxy)phenoxy]propionate),
(A12) haloxyfop ((*RS*)-2-[4-(3-chloro-5-trifluoromethyl-2-pyridyloxy)phenoxy]propionic acid), or a salt thereof,
(A13) haloxyfop-P ((R)-2-[4-(3-chloro-5-trifluoromethyl-2-pyridyloxy)phenoxy]propionic acid), or a salt thereof,
(A14) haloxyfop-etotyl (ethoxyethyl (*RS*)-2-[4-(3-chloro-5-trifluoromethyl-2-pyridyloxy)phenoxy]propanoate),
(A15) haloxyfop-P-methyl (methyl (R)-2-[4-(3-chloro-5-trifluoromethyl-2-pyridyloxy)phenoxy]propanoate),
(A16) propaquizafop (2-isopropylideneamino-oxyethyl (R)-2-[4-(6-chloroquinoxalin-2-yloxy)phenoxy]propionate) or a salt thereof,
(A17) quizalofop ((*RS*)-2-[4-(6-chloroquinoxalin-2-yloxy)phenoxy]propionic acid), or a salt thereof,
(A18) quizalofop-ethyl (ethyl (*RS*)-2-[4-(6-chloroquinoxalin-2-yloxy)phenoxy]propionate),
(A19) quizalofop-P ((R)-2-[4-(6-chloroquinoxalin-2-yloxy)phenoxy]propionic acid), or a salt thereof,
(A20) quizalofop-P-ethyl (ethyl (R)-2-[4-(6-chloroquinoxalin-2-yloxy)phenoxy]propionate), and
(A21) quizalofop-P-tefuryl ((±)-tetrahydrofurfuryl (R)-2-[4-(6-chloroquinoxalin-2-yloxy)phenoxy]propionate).

Preferred aryloxyphenoxypropionate herbicides are:
(A1), (A2), (A4), (A5), (A10), (A11), (A14), (A15), (A16), (A18), (A20) and (A21).
Most preferably the aryloxyphenoxypropionate herbicide is (A5).

The following are preferred definitions in formula (I) for the use of compound (B) in the invention:
Preferably (R¹)ₙ is n radicals R¹ where the R¹ are identical or different and are each F, Cl, Br or CF₃.
Preferably n is 2 or 3.
Preferably R² is hydrogen or (C₁-C₄)-alkyl.
Preferably R³ is hydrogen, (C₁-C₄)-alkyl, (C₂-C₄)-alkenyl or (C₂-C₄)-alkynyl.
Preferably R⁴ is hydrogen or (C₁-C₈)-alkyl.

More preferably (R¹)ₙ is selected from the group consisting of 2,4-Cl₂, 2,4-Br₂, 2-CF₃-4-Cl and 2-Cl-4-CF₃.
More preferably R² is hydrogen or (C₁-C₄)-alkyl.
More preferably R³ is hydrogen or (C₁-C₄)-alkyl.
More preferably R⁴ is hydrogen or (C₁-C₄)-alkyl.

A preferred class of compounds (B) are of formula (I) wherein:
(R¹)ₙ is n radicals R¹ where the R¹ are identical or different and are each F, Cl, Br or CF₃,
n is 2 or 3,
R² is hydrogen or (C₁-C₄)-alkyl,
R³ is hydrogen, (C₁-C₄)-alkyl, (C₂-C₄)-alkenyl or (C₂-C₄)-alkynyl, and
R⁴ is hydrogen or (C₁-C₈)-alkyl.

A more preferred class of compounds (B) are of formula (I) wherein:
(R¹)ₙ is selected from the group consisting of 2,4-Cl₂, 2,4-Br₂, 2-CF₃-4-Cl and 2-Cl-4-CF₃,
R² is hydrogen or (C₁-C₄)-alkyl,
R³ is hydrogen or (C₁-C₄)-alkyl, and
R⁴ is hydrogen or (C₁-C₄)-alkyl.

Specific preferred compounds (B) of formula (I) are shown in Table 1 below:

**Table 1**

| Compound No. | (R¹)ₙ | R² | R³ | R⁴ |
|---|---|---|---|---|
| (B1) | 2,4-Cl₂ | C₂H₅ | CH₃ | C₂H₅ |
| (B2) | 2,4-Cl₂ | C₂H₅ | CH₃ | CH₃ |
| (B3) | 2-CF₃-4-Cl | C₂H₅ | CH₃ | C₂H₅ |
| (B4) | 2,4-Cl₂ | C₂H₅ | CH₃ | n-C₄H₉ |
| (B5) | 2,4-Cl₂ | C₂H₅ | CH₃ | i-C₄H₉ |
| (B6) | 2,4-Br₂ | C₂H₅ | CH₃ | C₂H₅ |
| (B7) | 2-Cl-4-CF₃ | C₂H₅ | CH₃ | CH₃ |
| (B8) | 2-CF₃-4-Cl | C₂H₅ | CH₃ | CH₃ |
| (B9) | 2,4-Br₂ | C₂H₅ | CH₃ | CH₃ |
| (B10) | 2,4-Cl₂ | C₂H₅ | H | CH₃ |
| (B11) | 2,4-Br₂ | C₂H₅ | CH₃ | n-C₄H₉ |
| (B12) | 2,4-Br₂ | C₂H₅ | CH₃ | i-C₄H₉ |

Most preferably (B) is ethyl 1-(2,4-dichlorophenyl)-5-(ethoxycarbonyl)-5-methyl-2-pyrazoline-3-carboxylate (B1) ("Mefenpyr-diethyl", see "The Pesticide Manual", 12th edition 2000, pp. 594-595), as described in WO 91/07874. Processes for preparation of mefenpyr-diethyl and the other compounds of formula (I) are also set forth therein.

Preferred is the use according to the invention of a combination selected from: (B1) + (A1), (B1) + (A2), (B1) + (A4), (B1) + (A5), (B1) + (A10), (B1) + (A11), (B1) + (A14), (B1) + (A15), (B1)+ (A16), (B1) + (A18), (B1) + (A20), (B1) + (A21) and (B1) + (A5) + (A4). Particularly preferred is the use of (B1) + (A5).

The compounds (A) and (B) which are used in the present invention are understood to embrace all stereoisomers and mixtures thereof, as well as their salts.

The activity of the contained herbicidally active compound against harmful plants is surprisingly better than that of the herbicide (A) alone i.e. it is synergistic. The higher efficacy permits the control of species which are as yet uncontrolled (gaps), an extension of the period of application and/or a reduction in the number of individual applications required and - as a result for the user - weed control systems which are more advantageous economically and ecologically.

A further feature of the invention therefore provides the use according to the invention for increasing the weed control of one or more aryloxyphenoxypropionate herbicides (A) or an agriculturally acceptable salt thereof, which comprises using a synergistic herbicidally effective amount of one or more compounds of formula (I) or a salt thereof (compounds (B)) in combination with one or more herbicides (A).

A yet further feature of the invention provides said use of the compounds (A) and (B) are applied simultaneously or separately (together or sequentially) to the plants, parts of the plants, seeds of the plants, or the area where the plants are grown or are to be grown.

The herbicide (A) and compounds (B) are generally applied simultaneously or within a short interval.
The herbicidal combinations (A) + (B) also reduce or eliminate phytotoxic effects which can occur when the herbicidally active compounds (A) alone are used in useful plants.

The aryloxyphenoxypropionate herbicides are generally known, and their preparation is described, for example, in the above mentioned publications, or can be carried out, for example by or analogously to the methods described in these publications.

For the preferred compounds, their preparation and general conditions for their use and in particular for specific example compounds, reference is made to the descriptions of the publications mentioned, and these descriptions are also part of the present invention.

Some of the aryloxyphenoxypropionate herbicides (A) can form salts by addition of a suitable inorganic or organic acid, such as, for example, HCl, HBr, H₂SO₄ or HNO₃, but also oxalic acid or sulfonic acids, to a basic group, generally a pyridine ring N atom. Suitable substituents which are present in deprotonated form, such as carboxylic acids, can form salts by replacing the hydrogen of suitable substituents, generally carboxylic acids, by an agriculturally suitable cation. These salts are, for example, metal salts, in particular alkali metal salts or alkaline earth metal salts, in particular sodium salts and potassium salts, or else ammonium salts, salts with organic amines or quaternary ammonium salts.

The compounds of the formula (I) can form salts by addition of a suitable inorganic or organic acid such as, for example, HCl, HBr, H₂SO₄ or HNO₃, or a mono- or bifunctional carboxylic acid or sulfonic acid, to a basic group such as, for example, the "amino" or "alkylamino" function of the pyrazole ring. Suitable substitutents which are present in deprotonated form such as, for example, carboxylic acids, can form internal salts with groups which are protonable themselves, such as amino groups. Likewise and usually more frequent in the present case, salts can be formed by replacing the hydrogen in suitable substituents, such as carboxylic acids, by an agriculturally suitable cation. These salts are, for example, metal salts, in particular alkali metal salts or alkaline earth metal salts, in particular sodium salts and potassium salts, or else ammonium salts, salts with organic amines, or quaternary ammonium salts.

In the formula (I) the radicals alkyl, alkoxy, haloalkyl and the corresponding unsaturated radicals can in each case be straight-chain or branched in the carbon skeleton. Unless specifically mentioned otherwise, the lower carbon skeletons, for example with 1 to 6 carbon atoms or in the case of unsaturated groups with 2 to 6 carbon atoms are preferred for these radicals. Alkyl radicals, also in the composed meanings, such as alkoxy, haloalkyl, and the like, are, for example, methyl, ethyl, nor isopropyl, n-, i-, t- or 2-butyl, pentyls, hexyls, such as n-hexyl, isohexyl and 1,3-dimethylbutyl, heptyls, such as n-heptyl, 1-methylhexyl and 1,4-dimethylpentyl; alkenyl and alkynyl radicals have the meaning of the possible unsaturated radicals which correspond to the alkyl radicals; alkenyl is, for example, allyl, 1-methylprop-2-en-1-yl, 2-methylprop-2-en-1-yl, but-2-en-1-yl, but-3-en-1-yl, 1-methyt-but-3-en-1-yl and 1-methyl-but-2-en-1-yl; alkynyl is, for example, propargyl, but-2-yn-1-yl, but-3-yn-1-yl, 1-methylbut-3-yn-1-yl.

Cycloalkyl is a carbocyclic saturated ring system having preferably 3-8 carbon atoms, for example cyclopropyl, cyclobutyl, cyclopentyl or cyclohexyl.

Halogen is, for example, fluorine, chlorine, bromine or iodine. Haloalkyl is alkyl which is partially or fully substituted by halogen, preferably by fluorine, chlorine and/or bromine, in particular by fluorine or chlorine, for example, monohaloalkyl, perhaloalkyl, CF₃, CHF₂, CH₂F, CF₃CF₂, CH₂FCHCl, CCl₃, CHCl₂, CH₂CH₂Cl.

The compounds (A) or their salts and the synergistic compounds (B) or their salts can be used in the method of the present invention, for example, as such or in the form of their preparations (formulations) combined with other pesticidally active substances, such as, for example, insecticides, acaricides, nematicides, herbicides, fungicides, safeners, fertilizers and/or growth regulators, for example in the form of a finished formulation or tank mixes. The preferred additional active compounds are herbicides.

The above combinations can be used as herbicidal compositions comprising the combinations and optionally other active ingredients and/or formulation auxiliaries.
Herbicidal compositions comprising combinations of fenoxaprop-P-ethyl and mefenpyr-diethyl are already known, see for example "The Pesticide Manual" 12th edition (British Crop Protection Council), 2000, page 393-394.

Preferably the herbicide (A) which is present in the herbicidal combination is selected from the group consisting of:
clodinafop-propargyl, cyhalofop-butyl, diclofop, diclofop-methyl, fenoxaprop-P-ethyl, fenoxaprop-P, fenoxaprop-ethyl, fenoxaprop, fluazifop, fluazifop-butyl, fluazifop-P-butyl, haloxyfop, haloxyfop-etotyl, haloxyfop-P-methyl, propaquizafop, quizalofop, quizalofop-ethyl, quizalofop-P, quizalofop-P-ethyl, and quizalofop-P-tefuryl, or an agriculturally acceptable salt of afore-mentioned acidic compounds.

More preferably the herbicide (A) which is present in the herbicidal combination is selected from the group consisting of:
(A1), (A2), (A4), (A5), (A10), (A11), (A14), (A15), (A16), (A18), (A20) and (A21).

Suitable active compounds (C) which can be combined with the compounds (A) and (B) according to the invention in mixed formulations or in a tank mix are, for example, known active compounds, preferably herbicides, as described, for example, in "The Pesticide Manual", 12^{th} edition, The British Crop Protection Council 2000 or in "The Compendium of Pesticide Common Names" (available from the Internet), and the literature cited therein. For example, the following active compounds may be mentioned as known herbicides or plant growth regulators and which can be combined with the compounds of the formula (A) and (B); hereinbelow, the compounds are either named by the "common name" (in most cases in English spelling) in accordance with the International Organization for Standardization (ISO) or by the chemical names, if appropriate together with a customary code number: acetochlor; acifluorfen(-sodium); aclonifen; AKH 7088, i.e. [[[1-[5-[2-chloro-4-(trifluoromethyl)phenoxy]-2-nitrophenyl]-2-methoxyethylidene]amino]oxy]acetic acid and its methyl ester; alachlor; alloxydim(-sodium); ametryn; amicarbazone, amidochlor, amidosulfuron; amitrol; AMS, i.e. ammonium sulfamate; anilofos; asulam; atrazine; azafenidin; azimsulfuron (DPX-A8947); aziprotryn; barban; BAS 516 H, i.e. 5-fluoro-2-phenyl-4H-3,1-benzoxazin-4-one; beflubutamid; benazolin(-ethyl); benfluralin; benfuresate; bensulfuron(-methyl); bensulide; bentazone(-sodium); benzobicyclone; benzofenap; benzofluor; benzoylprop(-ethyl); benzthiazuron; bialaphos (bilanafos); bifenox; bispyribac(-sodium); bromacil; bromobutide; bromofenoxim; bromoxynil; bromuron; buminafos; busoxinone; butachlor; butafenacil; butamifos; butenachlor; buthidazole; butralin; butroxydim; butylate; cafenstrole (CH-900); carbetamide; carfentrazone(-ethyl); caloxydim, CDAA, i.e. 2-chloro-N,N-di-2-propenylacetamide; CDEC, i.e. 2-chloroallyl diethyldithiocarbamate; chlomethoxyfen; chloramben; chlorazifop-butyl; chlorbromuron; chlorbufam; chlorfenac; chlorflurenol-methyl; chloridazon; chlorimuron(-ethyl); chlomitrofen; chlorotoluron; chloroxuron; chlorpropham; chlorsulfuron; chlorthal-dimethyl; chlorthiamid; chlortoluron, cinidon(-methyl oder - ethyl), cinmethylin; cinosulfuron; clethodim; clefoxydim, clodinafop and its ester derivatives (for example clodinafop-propargyl); clomazone; clomeprop; cloproxydim; clopyralid; clopyrasulfuron(-methyl); cloransulam(-methyl); cumyluron (JC 940); cyanazine; cycloate; cyclosulfamuron (AC 104); cycloxydim; cycluron; cyhalofop and its ester derivatives (for example butyl-ester, DEH-112); cyperquat; cyprazine; cyprazole; daimuron; 2,4-D; 2,4-DB; dalapon; dazomet, desmedipham; desmetryn; di-allate; dicamba; dichlobenil; dichlorprop(-P); diclofop and its esters such as diclofop-methyl; diclosulam, diethatyl(-ethyl); difenoxuron; difenzoquat; diflufenican; diflufenzopyr; dimefuron; dimepiperate; dimethachlor; dimethametryn; dimethenamid (SAN-582H); dimethenamid(-P); dimethazone, dimethipin; dimexyflam, dimetrasulfuron, dinitramine; dinoseb; dinoterb; diphenamid; dipropetryn; diquat; dithiopyn diuron; DNOC; eglinazine-ethyl; EL 77, i.e. 5-cyano-1-(1,1-dimethylethyl)-N-methyl-1H-pyrazole-4-carboxamide; endothal; epoprodan, EPTC; esprocarb; ethalfluralin; ethametsulfuron-methyl; ethidimuron; ethiozin; ethofumesate; ethoxyfen and its esters (for example ethyl ester, HC-252), ethoxysulfuron, etobenzanid (HW 52); F5231, i.e. N-[2-chloro-4-fluoro-5-[4-(3-fluoropropyl)-4,5-dihydro-5-oxo-1 H-tetrazol-1-yl]-phenyl]ethanesulfonamide; fenoprop; fenoxan, fenoxaprop and fenoxaprop-P and their esters, for example fenoxaprop-P-ethyl and fenoxaprop-ethyl; fenoxydim; fentrazamide; fenuron; flamprop(-methyl or -isopropyl or -isopropyl-L); flazasulfuron; florasulam; fluazifop and fluazifop-P and their esters, for example fluazifop-butyl and fluazifop-P-butyl; fluazolate, flucarbazone(-sodium); fluchloralin; flufenacet (FOE 5043), flufenpyr, flumetsulam; flumeturon; flumiclorac(-pentyl); flumioxazin (S-482); flumipropyn; fluometuron; fluorochloridone, fluorodifen; fluoroglycofen(-ethyl); flupoxam (KNW-739); flupropacil (UBIC-4243); fluproanate, flupyrsulfuron(-methyl, or -sodium); flurenol(-butyl); fluridone; flurochloridone; fluroxypyr(-meptyl); flurprimidol, flurtamone; fluthiacet(-methyl); fluthiamide (flufenacet); fomesafen; foramsulfuron; fosamine; furilazole (MON 13900), furyloxyfen; glufosinate(-ammonium); glyphosate(-isopropylammonium); halosafen; halosulfuron(-methyl) and its esters (for example the methyl ester, NC-319); haloxyfop and its esters; haloxyfop-P (= R-haloxyfop) and its esters; HC-252 (diphenylether), hexazinone; imazamethabenz(-methyl); imazamethapyr; imazamox; imazapic, imazapyr; imazaquin and salts such as the ammonium salts; imazethamethapyr; imazethapyr, imazosulfuron; indanofan; iodosulfuron-(methyl)-(sodium), ioxynil; isocarbamid; isopropalin; isoproturon; isouron; isoxaben; isoxachlortole; isoxaflutole; isoxapyrifop; karbutilate; lactofen; lenacil; linuron; MCPA; MCPB; mecoprop; mefenacet; mefluidid; mesosulfuron(-methyl); mesotrione; metam, metamifop, metamitron; metazachlor; methabenzthiazuron; methazole; methoxyphenone; methyldymron; metobenzuron, metobromuron; (S-)metolachlor; metosulam (XRD 511); metoxuron; metribuzin; metsulfuron-methyl; MK-616; molinate; monalide; monocarbamide dihydrogensulfate; monolinuron; monuron; MT 128, i.e. 6-chloro-N-(3-chloro-2-propenyl)-5-methyl-N-phenyl-3-pyridazinamine; MT 5950, i.e. N-[3-chloro-4-(1-methylethyl)-phenyl]-2-methylpentanamide; naproanilide; napropamide; naptalam; NC 310, i.e. 4-(2,4-dichlorobenzoyl)-1-methyl-5-benzyloxypyrazole; neburon; nicosulfuron; nipyraclophen; nitralin; nitrofen; nitrofluorfen; norflurazon; orbencarb; oryzalin; oxadiargyl (RP-020630); oxadiazone; oxasulfuron; oxaziclomefone; oxyfluorfen; paraquat; pebulate; pelargonic acid; pendimethalin; penoxulam. Pentanochlor, pentoxazone; perfluidone; pethoxamid, phenisopham; phenmedipham; picloram; picolinafen; piperophos; piributicarb; pirifenop-butyl; pretilachlor; primisulfuron(-methyl); procarbazone(-sodium); procyazine; prodiamine; profluazole, profluralin; proglinazine(-ethyl); prometon; prometryn; propachlor; propanil; propaquizafop; propazine; propham; propisochlor; propoxycarbazone(-sodium), propyzamide; prosulfalin; prosulfocarb; prosulfuron (CGA-152005); prynachlor; pyraclonil, pyraflufen(-ethyl); pyrazolinate; pyrazon; pyrazosulfuron(-ethyl); pyrazoxyfen; pyribenzoxim; pyributicarb; pyridafol; pyridate; pyriftalid, pyrimidobac(-methyl); pyrithiobac(-sodium) (KIH-2031); pyroxofop and its esters (for example propargyl ester); quinclorac; quinmerac; quinoclamine, quinofop and its ester derivatives, quizalofop and quizalofop-P and their ester derivatives, for example quizalofop-ethyl; quizalofop-P-tefuryl and -ethyl; renriduron; rimsulfuron (DPX-E 9636); S 275, i.e. 2-[4-chloro-2-fluoro-5-(2-propynyloxy)phenyl]-4,5,6,7-tetrahydro-2H-indazole; secbumeton; sethoxydim; siduron; simazine; simetryn; SN 106279, i.e. 2-[[7-[2-chloro-4-(trifluoromethyl)phenoxy]-2-naphthalenyl]oxy]propanoic acid and its methyl ester; sulcotrione; sulfentrazone (FMC-97285, F-6285); sulfazuron; sulfometuron(-methyl); sulfosate (ICI-AO224); sulfosulfuron; TCA; tebutam (GCP-5544); tebuthiuron; tepraloxydim; terbacil; terbucarb; terbuchlor; terbumeton; terbuthylazine; terbutryn; TFH 450, i.e. N,N-diethyl-3-[(2-ethyl-6-methylphenyl)sulfonyl]-1 H-1,2,4-triazole-1-carboxamide; thenylchlor (NSK-850); thiafluamide; thiazafluron; thiazopyr (Mon-13200); thidiazimin (SN-24085); thifensulfuron(-methyl); thiobencarb; tiocarbazil; tralkoxydim; tri-allate; triasulfuron; triaziflam; triazofenamide; tribenuron(-methyl); 2,3,6-trichlorobenzoic acid (2,3,6-TBA), triclopyr; tridiphane; trietazine; trifloxysulfuron(-sodium), trifluralin; triflusulfuron and esters (e.g. methyl ester, DPX-66037); trimeturon; tritosulfuron; tsitodef; vernolate; WL 110547, i.e. 5-phenoxy-1-[3-(trifluoromethyl)phenyl]-1 H-tetrazole; UBH-509; D-489; LS 82-556; KPP-300; NC-324; NC-330; KH-218; DPX-N8189; SC-0774; DOWCO-535; DK-8910; V-53482; PP-600; MBH-001; KIH-9201; ET-751; KIH-6127; KIH-2023 and KIH5996.

In individual cases, it may be advantageous to combine one of the compounds (A) with a plurality of compounds (B).

The application rate of the herbicides (A) can be varied within wide limits, the optimum amount depending on the herbicide in question, the spectrum of harmful plants and the crop plants. In general, the application rate of (A) is in the range from 1 g to 2 kg, preferably 5 g to 1.5 kg, more preferably 10 g to 150 g, most preferably 15 g to 75 g of active compound (a.i.) per ha.

The invention more particularly relates to the use according to the invention for increasing the weed control of one or more aryloxyphenoxypropionate herbicides (A) or an agriculturally acceptable salt thereof, which comprises using a synergistic herbicidally effective amount of one or more compounds of formula (I) or a salt thereof (compounds (B)) in combination with one or more herbicidal compounds (A), wherein the combination of compounds (A) and (B) is defined above.

More preferred is the above method wherein the compounds (A) and (B) are applied simultaneously or separately to the plants, parts of the plants, seeds of the plants, or the area where the plants are grown or are to be grown.

The herbicidally active compounds and the compounds (B) can be applied together (as finished formulation or by the tank-mix method) or sequentially in any order. The weight ratio herbicide (A) : compound (B) can vary within wide limits and is, for example, in the range from 1:10 to 100:1, preferably from 1:2 to 20:1, in particular from 1:1 to 15:1, most preferably from 2:1 to 5:1. The amounts of herbicidally active compound and compound (B) which are optimal in each case depend on the active compound (A) and the compound (B) in question and on the type of crops and weeds to be treated, and they can be determined in each case by appropriate preliminary experiments.

Depending on their properties, the compounds (B) may be used for pre-treating the seed of the crop plant (seed dressing) or the seedlings or be incorporated into the seed furrow prior to sowing. In the pretreatment of seedlings it is possible, for example, to spray the roots or the entire seedling with a solution of the compounds (B) or to dip them into such a solution. The use of one or more herbicides can then be carried out by the pre-emergence or post-emergence method.

Alternatively, it is possible to apply the compounds (B) together with the herbicides, before or after emergence of the plants. Pre-emergence treatment includes both the treatment of the area under cultivation prior to sowing and the treatment of the areas under cultivation where the crops have been sown but not yet emerged. A sequential procedure, where the treatment with compound (B) is carried out first followed, preferably closely, by application of the herbicide, is also possible. In individual cases, it may also be expedient to apply the compound (B) after application of the herbicide.

In general, simultaneous application of compound (B) and herbicide in the form of tank mixes or finished formulations is preferred.

The application rate of the compound (B) can also be varied within wide limits, however a surprising feature of the invention is that only a low quantity of compound (B) is needed to give a very useful increase in the level of weed control compared to the use of (A) and (B) alone (i.e a synergistic effect). The amount of compound (B) used varies according to a number of parameters including the particular compound (B) employed, the crop to be protected, the amount and rate of herbicide applied, the soil type and climatic conditions prevailing. Also, the selection of the specific compound (B) for use in the method of the invention, the manner in which it is to be applied and the determination of the activity which is non-phytotoxic, can be readily performed in accordance with common practice in the art. The application rate of compound (B) can vary within wide limits and is generally in the range from 1 g to 500 g, preferably from 2 g to 250 g, more preferably 5 g to 100 g, most preferably 5 g to 20 g of compound (B) (a.i.) per hectare.

The herbicidal combinations (A) + (B) used according to the invention, for example by way of co-formulation or tank mixture have excellent herbicidal activity against a broad spectrum of economically important mono- and dicotyledonous harmful plants. The combinations also act efficiently on perennial weeds which produce shoots from rhizomes, root stocks or other perennial organs and which are difficult to control. The herbicidal effects of the combinations are advantageous compared to those of the herbicides (A) when used alone at comparable application rates of herbicide (A).

Examples of weed species which may be controlled by the herbicidal combinations (A) + (B) include the monocotyledonous weed species Agrostis, Alopecurus, Apera, Avena, Brachicaria, Bromus, Dactyloctenium, Digitaria, Echinochloa, Eleocharis, Eleusine, Festuca, Fimbristylis, Ischaemum, Lolium, Monochoria, Panicum, Paspalum, Phalaris, Phleum, Poa, Sagittaria, Scirpus, Setaria, Sphenoclea and Cyperus species from the annual group and, amongst the perennial species, Agropyron, Cynodon, Imperata and Sorghum and also perennial Cyperus species, in particular Alopecurus myosuroides.

If the combinations used according to the invention are applied to the soil surface prior to germination, then the weed seedlings are either prevented completely from emerging, or the weeds grow until they have reached the cotyledon stage but then their growth stops, and, eventually, after three to four weeks have elapsed, they die completely.

If the combinations are applied post-emergence to the green parts of the plants, growth also stops drastically a very short time after the treatment and the weed plants remain at the developmental stage of the point in time of application, or they die completely after a certain time, so that in this manner competition by the weeds, which is harmful to the crop plants, is eliminated at a very early point in time and in a sustained manner.

The active compound combinations (A) + (B) are suitable for weed control in a number of crop plants, for example in economically important crops such as cereals wheat, barley, rice, maize and sorghum, or dicotyledonous crops, such as soya bean, sunflower and sugar cane, (including ®Liberty link com and ®Round-up Ready corn or soybean). Of particular interest is the use in cereals such as wheat (including durum wheat) and barley, in particular wheat.

The use of the invention may also be employed for controlling harmful plants in known crops or in still to be developed genetically engineered plants. Transgenic plants generally have particularly advantageous properties, for example resistance to certain pesticides, above all certain herbicides, resistance to plant diseases or causative organisms of plant diseases, such as certain insects or microorganisms such as fungi, bacteria or viruses. Other particular properties relate, for example, to the quantity, quality, storage-stability, composition and to specific ingredients of the harvested product. Thus, transgenic plants having an increased starch content or a modified quality of the starch or those having a different fatty acid composition of the harvested product are known.

The use of the invention may also be employed in economically important transgenic crops of useful and ornamental plants, for example of cereals such as wheat, barley, rye, oats, millett, rice, manioc and maize or else in crops of sugarbeet, cotton, soya bean, oil seed rape, potatoes, tomatoes, peas and other vegetable species.

The active compound combinations used according to the invention can be present both as mixed formulations of the two components, if appropriate with other active compounds, additives and/or customary formulation auxiliaries, which are then applied in a customary manner diluted with water, or be prepared as so-called tank mixes by joint dilution of the separately formulated or partially separately formulated components with water.

The compounds (A) and (B) or their combinations can be formulated in various ways depending on the prevailing biological and/or chemico-physical parameters. Examples of suitable formulation options are: wettable powders (WP), emulsifiable concentrates (EC), aqueous solutions (SL), emulsions (EW), such as oil-in-water and water-in-oil emulsions, sprayable solutions or emulsions, oil- or water-based dispersions, suspoemulsions, dusts (DP), seed-dressing compositions, granules for broadcasting and soil application, or water-dispersible granules (WG), ULV formulations, microcapsules or waxes.

The individual formulation types are known in principle and are described, for example, in Winnacker-Küchler, "Chemische Technologie" [Chemical Technology], Volume 7, C. Hauser Verlag Munich, 4th. Edition 1986; van Valkenburg, "Pesticides Formulations", Marcel Dekker, N.Y., 1973; K. Martens, "Spray Drying Handbook", 3rd Ed. 1979, G. Goodwin Ltd. London.

The necessary formulation auxiliaries, such as inert materials, surfactants, solvents and other additives, are likewise known and are described, for example, in Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1950; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte" [Surface-active ethylene oxide adducts], Wiss. Verlagsgesellschoft, Stuttgart 1976; Winnacker-Küchler, "Chemische Technologie" [Chemical Technology], Volume 7, C. Hauser Verlag Munich, 4th Edition 1986.

Based on these formulations it is also possible to produce combinations with other pesticidally active substances, such as other herbicides, fungicides or insecticides, and also with safeners, fertilizers and/or growth regulators, for example in the form of a ready-mix or tank mix.

Wettable powders are preparations which are uniformly dispersible in water and which contain, in addition to the active compound and as well as a diluent or inert substance, surfactants of ionic or nonionic type (wetting agents, dispersants), for example polyethoxylated alkyl phenols, polyethoxylated fatty alcohols, polyethoxylated fatty amines, alkanesulfonates, alkylbenzenesulfonates, sodium ligninsulfonate, sodium 2,2'-dinaphthylmethane-6,6'-disulfonate, sodium dibutylnaphthalene-sulfonate or else sodium oleoylmethyltaurinate.

Emulsifiable concentrates are prepared by dissolving the active compound in an organic solvent, for example butanol, cyclohexanone, dimethylformamide, xylene or else relatively high-boiling aromatic compounds or hydrocarbons with the addition of one or more surfactants of ionic or nonionic type (emulsifiers). Examples of emulsifiers which can be used are calcium alkylarylsulfonates, such as Ca dodecylbenzenesulfonate, or nonionic emulsifiers, such as fatty acid polyglycol esters, alkylaryl polyglycol ethers, fatty alcohol polyglycol ethers, propylene oxide-ethylene oxide condensation products, alkyl polyethers, sorbitan fatty acid esters, polyoxyethylene sorbitan fatty acid esters or polyoxyethylene sorbitan esters.

Dusts are obtained by grinding the active compound with finely divided solid substances, for example talc, natural clays, such as kaolin, bentonite and pyrophyllite, or diatomaceous earth.

Granules can be prepared either by spraying the active compound onto adsorptive, granulated inert material or by applying active-compound concentrates to the surface of carriers such as sand, kaolinites or granulated inert material, by means of adhesive binders, for example polyvinyl alcohol, sodium polyacrylate or else mineral oils. Suitable active compounds can also be granulated in the manner which is customary for the preparation of fertilizer granules, if desired as a mixture with fertilizers.
Water-dispersible granules are generally prepared by processes such as spray-drying, fluidized-bed granulation, disk granulation, mixing using high-speed mixers, and extrusion without solid inert material.

The agrochemical formulations generally contain from 0.1 to 99% by weight, in particular from 2 to 95% by weight, of active compounds of types (A) and/or (B), the following concentrations being customary, depending on the type of formulations: In wettable powders the concentration of active compound is, for example, from about 10 to 95% by weight, the remainder to 100% by weight consisting of customary formulation constituents. In emulsifiable concentrates the concentration of active compound can be, for example, from 5 to 80% by weight.
Formulations in the form of dusts usually contain from 5 to 20% by weight of active compound, while sprayable solutions contain from about 0.2 to 25% by weight of active compound.
In the case of granules, such as dispersible granules, the content of active compound depends partly on whether the active compound is in liquid or solid form and on which granulation auxiliaries and fillers that are used. In water-dispersible granules the content is generally between 10 and 90% by weight.

In addition, said formulations of active compound may comprise the tackifiers, wetting agents, dispersants, emulsifiers, preservatives, antifreeze agents and solvents, fillers, colorants and carriers, antifoams, evaporation inhibitors, pH and viscosity regulators, thickeners and/or fertilizers which are customary in each case.

For use, the formulations, which are in commercially available form, are, if appropriate, diluted in a customary manner, for example using water in the case of wettable powders, emulsifiable concentrates, dispersions and water-dispersible granules. Preparations in the form of dusts, soil granules, granules for spreading and sprayable solutions are conventionally not diluted any further with other inert substances prior to use.

The herbicidal compound combinations can be applied to the plants, parts of the plants, seeds of the plants or the area under cultivation (tilled soil), preferably to the green plants and parts of the plants and, if desired, additionally to the tilled soil. A possible use is the joint application of the active compounds contained in the form of tank mixes, where the concentrated formulations of the individual active substances, in the form of their optimal formulations, are mixed jointly with water in the tank, and the resulting spray mixture is applied.

A joint herbicidal formulation of the combination according to the invention of the active compounds (A) and (B) has the advantage that it can be applied more easily because the amounts of the components have already been adjusted to one another in the correct ratio. Moreover, the auxiliaries of the formulation can be selected to suit each other in the best possible way, while a tank mix of various formulations may result in undesirable combinations of auxiliaries.

### General formulation examples

a) A dust is obtained by mixing 10 parts by weight of an active compound/active compound mixture and 90 parts by weight of talc as inert substance and comminuting the mixture in a hammer mill.
b) A wettable powder which is readily dispersible in water is obtained by mixing 25 parts by weight of an active compound/active compound mixture, 64 parts by weight of kaolin-containing quartz as inert substance, 10 parts by weight of potassium lignosulfonate and 1 part by weight of sodium oleoylmethyltaurinate as wetting agent and dispersant, and grinding the mixture in a pinned-disk mill.
c) A dispersion concentrate which is readily dispersible in water is obtained by mixing 20 parts by weight of an active compound/active compound mixture with 6 parts by weight of alkylphenol polyglycol ether (®Triton X 207), 3 parts by weight of isotridecanol polyglycol ether (8 EO) and 71 parts by weight of paraffinic mineral oil (boiling range for example approximately 255 to 277°C) and grinding the mixture in a ball mill to a fineness of below 5 microns.
d) An emulsifiable concentrate is obtained from 15 parts by weight of an active compound/active compound mixture, 75 parts by weight of cyclohexanone as solvent and 10 parts by weight of ethoxylated nonylphenol as emulsifier.
e) Water-dispersible granules are obtained by mixing
   75 parts by weight of an active compound/active compound mixture,
   10 parts by weight of calcium lignosulfonate,
   5 parts by weight of sodium lauryl sulfate,
   3 parts by weight of polyvinyl alcohol and
   7 parts by weight of kaolin,
   grinding the mixture in a pinned-disk mill and granulating the powder in a fluidized bed by spraying on water as granulation liquid.
f) Water-dispersible granules are also obtained by homogenizing and precomminuting, in a colloid mill,
   25 parts by weight of an active compound/active compound mixture,
   5 parts by weight of sodium 2,2'-dinaphthylmethane-6,6'-disulfonate,
   2 parts by weight of sodium oleoylmethyltaurinate,
   1 part by weight of polyvinyl alcohol,
   17 parts by weight of calcium carbonate and
   50 parts by weight of water,
   subsequently grinding the mixture in a bead mill and atomizing and drying the resulting suspension in a spray tower by means of a single-substance nozzle.
The following non-limiting examples further illustrate the invention.

### Biological examples

### Example 1: Post-emergence effect on weeds and selectivity in winter wheat (field trials)

Winter wheat was grown outdoors on plots under natural outdoor conditions, and seeds of typical harmful plants were laid out. Treatment with a mixture of fenoxaprop-P-ethyl (37.3 g a.i./ha) and mefenpyr-diethyl (10 g a.i./ha) using standard formulations of the active ingredients at an application rate of 300 I water per hectare was carried out after the harmful plants had emerged and the winter wheat was in the growth stage between 3 and 5 leaves. The effect of the composition was assessed 112 days after treatment by scoring visually in comparison with untreated controls. The results are summarized in Table 2 which shows an improved weed control effect on Alopecurus myosuroides, in addition to a safening effect in winter wheat.

**Table 2**

| Compound No. | Application rate (g a.i./ha) | Weed control (%) of ALOMY | Phytotox (%) of TRZAW |
|---|---|---|---|
| (A5) | 37.3 | 69 | 10 |
| (B1) | 10 | 0 | 0 |
| (A5) + (B1) | 37.3 + 10 | 90 | 0 |

| | | | |
|---|---|---|---|
| Abbreviations used in Table 2: g a.i./ha = grammes active ingredient (= Compound) per hectare TRZAW = Triticum aestivum (winter wheat) ALOMY = Alopecurus myosuroides (A5) = Fenoxaprop-P-ethyl (B1) = Mefenpyr-diethyl The numbers in the two right-handed columns refer to the percentage weed control or to the damage to the crop, respectively. | | | |

### Examples 2 and 3: Post-emergence effect on weeds and selectivity in spring wheat (field trials)

Spring wheat was grown outdoors on plots under natural outdoor conditions, and seeds of typical harmful plants were laid out. Treatment with a mixture of a (hetero)aryloxyphenoxypropionate herbicide and the safener mefenpyr-diethyl using standard formulations of the active ingredients at an application rate of 300 I water per hectare was carried out after the harmful plants had emerged and the spring wheat was in the growth stage between 3 and 5 leaves for the plants. The effect of the composition was assessed 4 weeks after treatment by scoring visually in comparison with untreated controls. The results are summarized in Table 3 which shows an improved weed control effect on weeds, in addition to a safening effect in spring wheat.

**Table 3**

| Compound No. | Application rate (g a.i./ha) | Weed control (%) of SETLU | Phytotox (%) of TRZAS |
|---|---|---|---|
| (A1) | 112 | 68 | 20 |
| (B1) | 28 | 0 | 0 |
| (A1) + (B1) | 112 + 28 | 98 | 10 |
| (A3) | 1680 | 45 | 12 |
| (B1) | 28 | 0 | 0 |
| (A3) + (B1) | 1680 + 28 | 68 | 3 |

| | | | |
|---|---|---|---|
| Abbreviations used in Table 2: g a.i./ha = grammes active ingredient (= Compound) per hectare TRZAS = Triticum aestivum (spring wheat) SETLU = Setaria lutescens (A1) = Clodinafop-propargyl (A3) = Diclofop-methyl (B1) = Mefenpyr-diethyl | | | |

## Claims

1. The use of a compound of formula (I) or a salt thereof (compounds (B)): 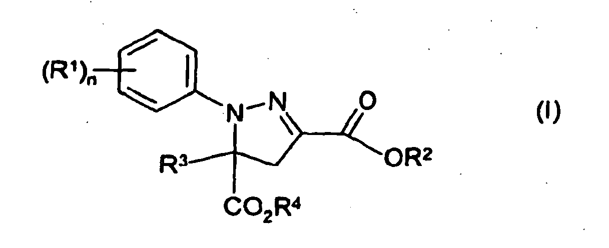 in which
(R¹)ₙ is n radicals R¹ where the R¹ are identical or different and are each halogen or (C₁-C₄)-haloalkyl,
n is an integer from 1 to 3,
R² is hydrogen, (C₁-C₆)-alkyl, (C₁-C₄)-alkoxy-(C₁-C₄)-alkyl, (C₃-C₆)-cycloalkyl, tri-(C₁-C₄)-alkyl-silyl or tri-(C₁-C₄)-alkyl-silylmethyl,
R³ is hydrogen, (C₁-C₆)-alkyl, (C₁-C₆)-haloalkyl, (C₂-C₆)alkenyl, (C₂-C₆)-alkynyl or (C₃-C₆)cycloalkyl, and
R⁴ is hydrogen or (C₁-C₁₂)-alkyl,
for increasing the weed control of one or more aryloxyphenoxypropionate herbicides (A) or an agriculturally acceptable salt thereof.

2. The use as claimed in claim 1, **characterised in that**:
(R¹)n is n radicals R¹ where the R¹ are identical or different and are each F, Cl, Br or CF₃, n Is 2 or 3, R² is hydrogen or (C₁-C₄)-alkyl,
R³ is hydrogen, (C₁-C₄)-alkyl, (C₂-C₄)-alkenyl or (C₂-C₄)-alkynyl, and
R⁴ is hydrogen or (C₁-C₈)-alkyl.

3. The use as claimed in claim 1, **characterised in that** compound (B) is ethyl 1-(2,4-dichlorophenyl)-5-(ethoxycarbonyl)-5-methyl-2-pyrazoline-3-carboxylate.

4. The use as claimed in any of claims 1 to 3 **characterised by** one or more compounds (A) selected from the group consisting of:
clodinafop-propargyl, cyhalofop-butyl, diclofop, diclofop-methyl, fenoxaprop-P-ethyl, fenoxaprop-P, fenoxaprop-ethyl, fenoxaprop, fluazifop, fluazifop-butyl, fluazifop-P-butyl, haloxyfop, haloxyfop-etotyl, haloxyfop-P-methyl, propaquizafop, quizatofop, quizalofop-ethyl, quizalofop-P, quizalofop-P-ethyl, and quizalofop-P-tefuryl, or an agriculturally acceptable salt of afore-mentioned acidic compounds.

5. The use as claimed in any of claims 1 to 3 **characterised in that** compound (A) is fenoxaprop-P-ethyl.

6. The use as claimed in any of claims 1 to 3 **characterised in that** compound (A) is selected from the group consisting of clodinafop-propargyl, cyhalofop-butyl, diclofop-methyl, fenoxaprop-P-ethyl, fluazifop-butyl, fluazifop-P-butyl, haloxyfop-etotyl, haloxyfop-P-methyl, propaquizafop, quizalofop-ethyl, quizalofop-P-ethyl and quizalofop-P-tefuryl.

7. The use as claimed in claim 1 **characterised in that** compound (A) is clodinafop-propargyl and compound (B) is mefenpyr-diethyl.

8. The use as claimed in claim 1 **characterised in that** compound (A) is cyhalofop-butyl and compound (B) is mefenpyr-diethyl.

9. The use as claimed in claim 1 **characterised in that** compound (A) is diclofop-methyl and compound (B) is mefenpyr-diethyl.

10. The use as claimed in claim 1 **characterised in that** compound (A) is fenoxaprop-P-ethyl and compound (B) is mefenpyr-diethyl.

11. The use as claimed in claim 1 **characterised in that** compound (A) is fluazifop-butyl and compound (B) is mefenpyr-diethyl.

12. The use as claimed in claim 1 **characterised in that** compound (A) is fluazifop-P-butyl and compound (B) is mefenpyr-diethyl.

13. The use as claimed in claim 1 **characterised in that** compound (A) is haloxyfop-etotyl and compound (B) is mefenpyr-diethyl.

14. The use as claimed in claim 1 **characterised in that** compound (A) is haloxyfop-P-methyl and compound (B) is mefenpyr-diethyl.

15. The use as claimed in claim 1 **characterised in that** compound (A) is propaquizafop and compound (B) is mefenpyr-diethyl.

16. The use as claimed in claim 1 **characterised in that** compound (A) is quizalofop-ethyl and compound (B) is mefenpyr-diethyl.

17. The use as claimed in claim 1 **characterised in that** compound (A) is quizalofop-P-ethyl and compound (B) is mefenpyr-diethyl.

18. The use as claimed in claim 1 **characterised in that** compound (A) is quizalofop-P-tefuryl and compound (B) is mefenpyr-diethyl.

19. The use as claimed in claim 1 **characterised in that** compound (A) is a combination of fenoxaprop-P-ethyl and diclofop-methyl and compound (B) is mefenpyr-diethyl.

20. The use as claimed in any of claims 1 to 19, which comprises the active compounds (A) and (B) in a weight ratio of from 1:10 to 100:1.

21. The use as claimed in any of claims 1 to 19, which comprises the active compounds (A) and (B) in a weight ratio of from 1:2 to 20:1.

22. The use as claimed in any of claims 1 to 21 **characterised in that** the weeds are controlled in crops of useful plants.

## Patentansprüche

1. Verwendung einer Verbindung der Formel (I) oder eines Salzes davon (Verbindungen (B)): 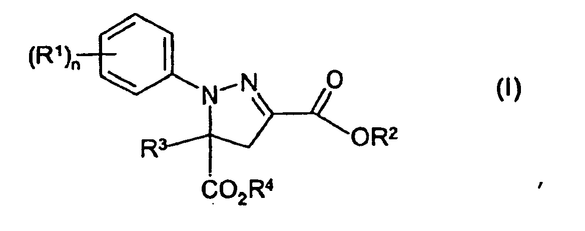 worin
(R¹)ₙ für n Reste R¹ steht, worin die Reste R¹ gleich oder verschieden sind und jeweils Halogen oder (C₁-C₄)-Halogenalkyl bedeuten,
n eine ganze Zahl von 1 bis 3 ist,
R² für Wasserstoff, (C₁-C₆)-Alkyl, (C₁-C₄)-Alkoxy-(C₁-C₄)-alkyl, (C₃-C₆)-Cycloalkyl, Tri-(C₁-C₄)-alkylsilyl oder Tri-(C₁-C₄)-alkylsilylmethyl steht,
R³ Wasserstoff, (C₁-C₆)-Alkyl, (C₁-C₆)-Halogenalkyl, (C₂-C₆)-Alkenyl, (C₂-C₆)-Alkinyl oder (C₃-C₆)-Cycloalkyl ist und
R⁴ Wasserstoff oder (C₁-C₁₂)-Alkyl bedeutet,
zur Steigerung der Unkrautbekämpfung eines oder mehrerer Aryloxyphenoxypropionat-Herbizide (A) oder eines landwirtschaftlich annehmbaren Salzes davon.

2. Verwendung nach Anspruch 1, **dadurch gekennzeichnet, daß**:
(R¹)ₙ für n Reste R¹ steht, worin die Reste R¹ gleich oder verschieden sind und jeweils F, Cl, Br oder CF₃ bedeuten, n den Wert 2 oder 3 hat,
R² für Wasserstoff oder (C₁-C₄)-Alkyl steht,
R³ Wasserstoff, (C₁-C₄)-Alkyl, (C₂-C₄)-Alkenyl oder (C₂-C₄)-Alkinyl darstellt und
R⁴ Wasserstoff oder (C₁-C₈)-Alkyl ist.

3. Verwendung nach Anspruch 1, **dadurch gekennzeichnet, daß** die Verbindung (B) Ethyl-1-(2,4-dichlorphenyl)-5-(ethoxycarbonyl)-5-methyl-2-pyrazolin-3-carboxylat ist.

4. Verwendung nach einem der Ansprüche 1 bis 3, **gekennzeichnet durch** eine oder mehrere Verbindungen (A), ausgewählt aus der aus:
Clodinafop-propargyl, Cyhalofop-butyl, Diclofop, Diclofop-methyl, Fenoxaprop-P-ethyl, Fenoxaprop-P, Fenoxaprop-ethyl, Fenoxaprop, Fluazifop, Fluazifop-butyl, Fluazifop-P-butyl, Haloxyfop, Haloxyfop-etotyl, Haloxyfop-P-methyl, Propaquizafop, Quizalofop, Quizalofop-ethyl, Quizalofop-P, Quizalofop-P-ethyl und Quizalofop-P-tefuryl oder einem landwirtschaftlich annehmbaren Salz von vorstehend erwähnten sauren Verbindungen bestehenden Gruppe.

5. Verwendung nach einem der Ansprüche 1 bis 3, **dadurch gekennzeichnet, daß** die Verbindung (A) Fenoxaprop-P-ethyl ist.

6. Verwendung nach einem der Ansprüche 1 bis 3, **dadurch gekennzeichnet, daß** die Verbindung (A) aus der aus Clodinafop-propargyl, Cyhalofop-butyl, Diclofop-methyl, Fenoxaprop-P-ethyl, Fluazifop-butyl, Fluazifop-P-butyl, Haloxyfop-etotyl, Haloxyfop-P-methyl, Propaquizafop, Quizalofop-ethyl, Quizalofop-P-ethyl und Quizalofop-P-tefuryl bestehenden Gruppe ausgewählt ist.

7. Verwendung nach Anspruch 1, **dadurch gekennzeichnet, daß** die Verbindung (A) Clodinafop-propargyl ist und die Verbindung (B) Mefenpyr-diethyl ist.

8. Verwendung nach Anspruch 1, **dadurch gekennzeichnet, daß** die Verbindung (A) Cyhalofop-butyl ist und die Verbindung (B) Mefenpyr-diethyl ist.

9. Verwendung nach Anspruch 1, **dadurch gekennzeichnet, daß** die Verbindung (A) Diclofop-methyl ist und die Verbindung (B) Mefenpyr-diethyl ist.

10. Verwendung nach Anspruch 1, **dadurch gekennzeichnet, daß** die Verbindung (A) Fenoxaprop-P-ethyl ist und die Verbindung (B) Mefenpyr-diethyl ist.

11. Verwendung nach Anspruch 1, **dadurch gekennzeichnet, daß** die Verbindung (A) Fluazifop-butyl ist und die Verbindung (B) Mefenpyr-diethyl ist.

12. Verwendung nach Anspruch 1, **dadurch gekennzeichnet, daß** die Verbindung (A) Fluazifop-P-butyl ist und die Verbindung (B) Mefenpyr-diethyl ist.

13. Verwendung nach Anspruch 1, **dadurch gekennzeichnet, daß** die Verbindung (A) Haloxyfop-etotyl ist und die Verbindung (B) Mefenpyr-diethyl ist.

14. Verwendung nach Anspruch 1, **dadurch gekennzeichnet, daß** die Verbindung (A) Haloxyfop-P-methyl ist und die Verbindung (B) Mefenpyr-diethyl ist.

15. Verwendung nach Anspruch 1, **dadurch gekennzeichnet, daß** die Verbindung (A) Propaquizafop ist und die Verbindung (B) Mefenpyr-diethyl ist.

16. Verwendung nach Anspruch 1, **dadurch gekennzeichnet, daß** die Verbindung (A) Quizalofop-ethyl ist und die Verbindung (B) Mefenpyr-diethyl ist.

17. Verwendung nach Anspruch 1, **dadurch gekennzeichnet, daß** die Verbindung (A) Quizalofop-P-ethyl ist und die Verbindung (B) Mefenpyr-diethyl ist.

18. Verwendung nach Anspruch 1, **dadurch gekennzeichnet, daß** die Verbindung (A) Quizalofop-P-tefuryl ist und die Verbindung (B) Mefenpyr-diethyl ist.

19. Verwendung nach Anspruch 1, **dadurch gekennzeichnet, daß** die Verbindung (A) eine Kombination aus Fenoxaprop-P-ethyl und Diclofop-methyl ist und die Verbindung (B) Mefenpyr-diethyl ist.

20. Verwendung nach einem der Ansprüche 1 bis 19, welche die Wirkstoffe (A) und (B) in einem Gewichtsverhältnis von 1:10 bis 100:1 umfaßt.

21. Verwendung nach einem der Ansprüche 1 bis 19, welche die Wirkstoffe (A) und (B) in einem Gewichtsverhältnis von 1:2 bis 20:1 umfaßt.

22. Verwendung nach einem der Ansprüche 1 bis 21, **dadurch gekennzeichnet, daß** die Unkräuter in Anpflanzungen von Nutzpflanzen bekämpft werden.

## Revendications

1. Utilisation d'un composé de formule (I) ou d'un de ses sels (composés (B)) : 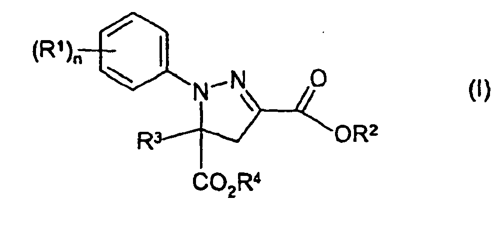 dans laquelle
(R¹)ₙ représente n radicaux R¹ dans lesquels les R¹ sont identiques ou différents et représentent chacun un atome d'halogène ou un groupe halogénoalkyle en C₁ à C₄,
n représente un nombre entier valant 1 à 3,
R² représente un atome d'hydrogène, un groupe alkyle en C₁ à C₆, (alcoxy en C₁ à C₄)-(alkyle en C₁ à C₄), cycloalkyle en C₃ à C₆, tri-(alkyle en C₁ à C₄)-silyle ou tri-(alkyle en C₁ à C₄)-silylméthyle,
R³ représente un atome d'hydrogène, un groupe alkyle en C₁ à C₆, halogénoalkyle en C₁ à C₆, alcényle en C₂ à C₆, alcynyle en C₂ à C₆ ou cycloalkyle en C₃ à C₆, et
R⁴ représente un atome d'hydrogène ou un groupe alkyle en C₁ à C₁₂,
pour augmenter le pouvoir désherbant d'un ou plusieurs herbicides aryloxyphénoxypropionate (A) ou d'un de leurs sels acceptables sur le plan agricole.

2. Utilisation selon la revendication 1, **caractérisée en ce que** :
(R¹)ₙ représente n radicaux R¹ dans lesquels les R¹ sont identiques ou différents et représentent chacun F, Cl, Br ou CF₃,
n vaut 2 ou 3,
R² représente un atome d'hydrogène ou un groupe alkyle en C₁ à C₄,
R³ représente un atome d'hydrogène, un groupe alkyle en C₁ à C₄, alcényle en C₂ à C₄ ou alcynyle en C₂ à C₄, et
R⁴ représente un atome d'hydrogène ou un groupe alkyle en C₁ à C₈.

3. Utilisation selon la revendication 1, **caractérisée en ce que** le composé (B) est le 1-(2,4-dichlorophényl)-5-(éthoxy-carbonyl)-5-méthyl-2-pyrazoline-3-carboxylate d'éthyle.

4. Utilisation selon l'une quelconque des revendications 1 à 3, **caractérisée par** un ou plusieurs composés (A) choisis dans le groupe constitué par :
le clodinafop-propargyl, le cyhalofop-butyl, le diclofop, le diclofop-méthyl, le fénoxaprop-P-éthyl, le fénoxaprop-P, le fénoxaprop-éthyl, le fénoxaprop, le fluazifop, le fluazifop-butyl, le fluazifop-P-butyl, l'haloxyfop, l'haloxyfop-étotyl, l'haloxyfop-P-méthyl, le propaquizafop, le quizalofop, le quizalofop-éthyl, le quizalofop-P, le quizalofop-P-éthyl et le quizalofop-P-téfuryl, or un sel acceptable sur le plan agricole des composés acides susmentionnés.

5. Utilisation selon l'une quelconque des revendications 1 à 3, **caractérisée en ce que** le composé (A) est le fénoxaprop-P-éthyl.

6. Utilisation selon l'une quelconque des revendications 1 à 3, **caractérisée en ce que** le composé (A) est choisi dans le groupe constitué par le clodinafop-propargyl, le cyhalofop-butyl, le diclofop-méthyl, le fénoxaprop-P-éthyl, le fluazifop-butyl, le fluazifop-P-butyl, l'haloxyfop-étotyl, l'haloxyfop-P-méthyl, le propaquizafop, le quizalofop-éthyl, le quizalofop-P-éthyl et le quizalofop-P-téfuryl.

7. Utilisation selon la revendication 1, **caractérisée en ce que** le composé (A) est le clodinafop-propargyl et le composé (B) est le méfenpyr-diéthyl.

8. Utilisation selon la revendication 1, **caractérisée en ce que** le composé (A) est le cyhalofop-butyl et le composé (B) est le méfenpyr-diéthyl.

9. Utilisation selon la revendication 1, **caractérisée en ce que** le composé (A) est le diclofop-méthyl et le composé (B) est le méfenpyr-diéthyl.

10. Utilisation selon la revendication 1, **caractérisée en ce que** le composé (A) est le fénoxaprop-P-éthyl et le composé (B) est le méfenpyr-diéthyl.

11. Utilisation selon la revendication 1, **caractérisée en ce que** le composé (A) est le fluazifop-butyl et le composé (B) est le méfenpyr-diéthyl.

12. Utilisation selon la revendication 1, **caractérisée en ce que** le composé (A) est le fluazifop-P-butyl et le composé (B) est le méfenpyr-diéthyl.

13. Utilisation selon la revendication 1, **caractérisée en ce que** le composé (A) est l'haloxyfop-étolyl et le composé (B) est le méfenpyr-diéthyl.

14. Utilisation selon la revendication 1, **caractérisée en ce que** le composé (A) est l'haloxyfop-P-méthyl et le composé (B) est le méfenpyr-diéthyl.

15. Utilisation selon la revendication 1, **caractérisée en ce que** le composé (A) est le propaquizafop et le composé (B) est le méfenpyr-diéthyl.

16. Utilisation selon la revendication 1, **caractérisée en ce que** le composé (A) est le quizalofop-éthyl et le composé (B) est le méfenpyr-diéthyl.

17. Utilisation selon la revendication 1, **caractérisée en ce que** le composé (A) est le quizalofop-P-éthyl et le composé (B) est le méfenpyr-diéthyl.

18. Utilisation selon la revendication 1, **caractérisée en ce que** le composé (A) est le quizalofop-P-téfuryl et le composé (B) est le méfenpyr-diéthyl.

19. Utilisation selon la revendication 1, **caractérisée en ce que** le composé (A) est une combinaison de fénoxaprop-P-éthyl et de diclofop-méthyl et le composé (B) est le méfenpyr-diéthyl.

20. Utilisation selon l'une quelconque des revendications 1 à 19, qui comprend les matières actives (A) et (B) dans un rapport pondéral de 1:10 à 100:1.

21. Utilisation selon l'une quelconque des revendications 1 à 19, qui comprend les matières actives (A) et (B) dans un rapport pondéral de 1:2 à 20:1.

22. Utilisation selon l'une quelconque des revendications 1 à 21, **caractérisée en ce que** les mauvaises herbes sont détruites dans des cultures de plantes utiles.
